# EUROPEAN PATENT SPECIFICATION

(11) **EP 3 422 084 B1**
(45) Date of publication and mention of the grant of the patent: **07.08.2019**
(21) Application number: 17179106.4
(22) Date of filing: 30.06.2017
(51) Int. Cl.: G02B 27/22, H04N 13/393

(54) **DEVICES AND METHODS FOR DISPLAYING A THREE-DIMENSIONAL IMAGE**
VORRICHTUNGEN UND VERFAHREN ZUR ANZEIGE EINES DREIDIMENSIONALEN BILDES
APPAREILS ET PROCÉDÉS D'AFFICHAGE D'UNE IMAGE TRIDIMENSIONNELLE

(43) Date of publication of application: 02.01.2019
(73) Proprietor: Vestel Elektronik Sanayi ve Ticaret A.S., 45030 Manisa (TR)
(72) Inventor: KÍRÍSKEN,, Barbaros, 45030 Manisa (TR)
(74) Representative: Flint, Adam

(56) References cited:
- US-A- 5 954 414
- US-A1- 2005 062 684
- US-B1- 6 646 623

## Description

### Technical Field

The present disclosure relates to devices and methods for displaying a three-dimensional image on a moving screen.

### Background

A volumetric display is a type of display capable of rendering three-dimensional (3D) static or moving images within a display volume. A swept volume display is a type of volumetric display in which a display screen displaying a varying two-dimensional (2D) image is moved rapidly within the display volume, thereby generating a 3D image as it moves through persistence of vision. Each individual 2D image therefore represents a "slice" of the overall 3D image.

The display screen may be an "active" screen comprising a plurality of light sources which generate the 2D images, or a "passive" screen comprising a surface onto which the 2D images are projected. The display screen may also be a variety of different shapes, such as a square or helix, as known in the art.

Each slice has a finite pixel (picture-element) resolution, and there are a finite number of slices per 3D frame. The rendered 3D image therefore consists of "voxels" (volume-elements) which are the smallest unit of the 3D image, i.e. a specific luminosity and/or colour value associated with a specific location within the display volume.

The "frame rate" of a swept volume display is the number of complete 3D images displayed per second. As each 3D image comprises a number of slices, the slice rate (the frequency at which the display renders 2D images) is greater than the frame rate, roughly equal to the frame rate multiplied by the number of slices per frame. For example, a display rendering 3D images comprised of 50 slices may have a frame rate of 24 frames/second and a slice rate of around 480 slices/second.

Known techniques and methods for rendering 3D volumetric images are described in the publications US 6 646 623, US 5 954 414 and US 2005/0062684.

### Summary

According to a first aspect disclosed herein, there is provided a method of displaying a 3D image within a display volume, the method comprising: receiving image data which specifies the 3D image as a sequence of 2D image slices through the 3D image, each 2D image slice being located at a respective slice location within the 3D image; moving a screen within the display volume; and when a display area of the screen is located at a position within the display volume that corresponds to a slice location, displaying the 2D image slice of that slice location on the display area; wherein the step of moving the screen within the display volume comprises moving the display area at a first speed when the display area is located at a slice location and moving the display area at a second speed greater than the first speed when the display area is not located at a slice location.

In an example, the 3D image is a static 3D image specified in the image data as a sequence of static 2D image slices through the static 3D image.

In an example, the 3D image is a 3D video image specified in the image data as a sequence of 2D video image slices through the 3D video image.

In an example, said moving the screen within the display volume comprises translating the screen within the display volume.

In an example, said moving the screen within the display volume comprises rotating the screen within the display volume.

In an example, the screen is a helix comprising a plurality of steps around a helix axis, each step providing a respective display area; the display volume is located off the helix axis; and said moving the screen within the display volume comprises rotating the helix about the helix axis such that each display area passes through the display area in turn.

In an example, said displaying a 2D image slice on the screen comprises projecting the 2D image onto the screen.

In an example, the screen comprises an image display generator for generating an image, and said displaying a 2D image slice on the screen comprises generating the 2D image at the screen using the image display generator.

According to a second aspect disclosed herein, there is provided a display device for displaying a 3D image within a display volume, the 3D image being specified as a sequence of 2D image slices through the 3D image, each 2D image slice being located at a respective slice location within the 3D image, the device comprising: a screen for displaying the 2D image slices; and an actuator configured to move the screen within the display volume at a first speed when the display area is located at a slice location and moving the display area at a second speed greater than the first speed when the display area is not located at a slice location; wherein the screen is configured to, when a display area of the screen is located at a position within the display volume that corresponds to a slice location, display the 2D image slice of that slice location on the display area.

In an example, the actuator is configured to move the screen within the display volume by translating the screen within the display volume.

In an example, the actuator is configured to move the screen within the display volume by rotating the screen within the display volume.

In an example, the screen is a helix comprising a plurality of steps around a helix axis, each step providing a respective display area; the display volume is located off the helix axis; and the actuator is configured to move the screen within the display volume by rotating the helix about the helix axis such that each display area passes through the display area in turn.

In an example, the display device is provided in combination with a projector configured to display a 2D image slice on the screen by projecting the 2D image slices on the screen.

In an example, the screen comprises an image display generator for generating an image, and the screen is configured to display a 2D image slice on the screen by generating the 2D image at the screen using the image display generator.

According to a third aspect disclosed herein, there is provided a display system comprising a controller and the display device according to the second aspect, wherein the controller is arranged to receive image data specifying the 3D image and to control the screen and the actuator accordingly.

### Brief Description of the Drawings

To assist understanding of the present disclosure and to show how embodiments may be put into effect, reference is made by way of example to the accompanying drawings in which:
Figure 1 shows schematically an example of a swept volume display device in accordance with embodiments of the present invention;
Figure 2 illustrates schematically an example of variable screen speed in accordance with the present invention;
Figure 3 is a schematic diagram illustrating an example of a display system in accordance with the present invention;
Figure 4 shows schematically an alternative example screen arrangement in which the screen is provided by a stepped helix in accordance with the present invention;
Figure 5 shows schematically an example display device rendering an example of a 3D image in accordance with the present invention; and
Figure 6 shows schematically an alternative example screen arrangement in which the screen is rotated around an axis in accordance with the present invention.

### Detailed Description

The human vision system does not perceive well very fast changes to an image. This property of the human vision system is called persistence of vision and is exploited in video technologies to display a "moving image" which in fact comprises a sequence of still images (frames) displayed in quick succession. For example, a film may be displayed in a cinema at for example 24 frames per second (fps) or 48fps, and a typical television may display a video at for example 60fps or 120fps.

Swept volume displays take advantage of this same phenomenon to display a 3D image comprising a sequence of 2D images. Picture or video is projected on a display screen and/or directly created by the display screen and the display screen is continuously moved within a display volume, so that the screen builds up a 3D image as it moves through persistence of vision.

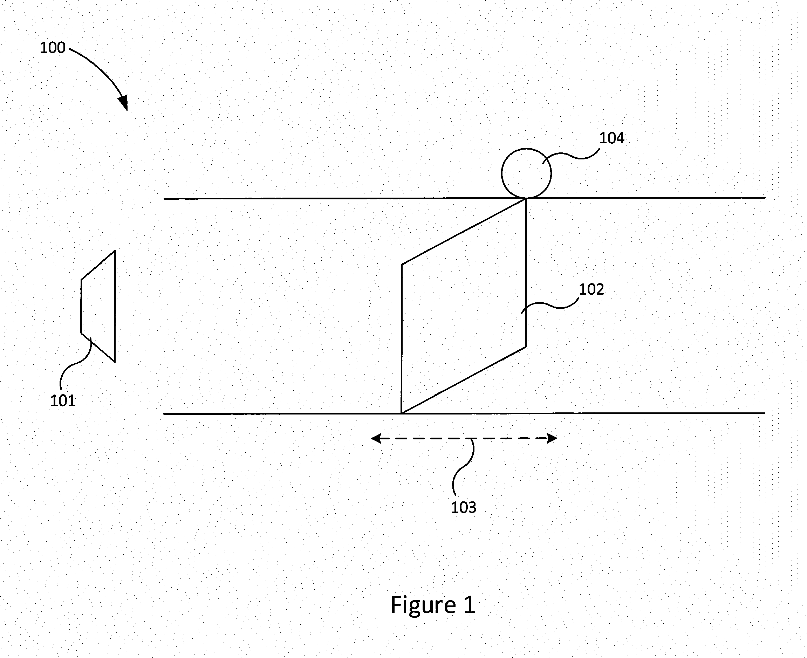

Figure 1 shows an example display device 100 comprising a projector 101, a display screen 102 and an actuator 104. The display screen 102 of this example is configured to translate or move towards or away from the projector 101 in a rendering direction 103 (i.e. with the movement being along or parallel to a projection axis of the projector 101) shown in Figure 1 and described below. The overall volume swept out by the display screen 102 as it moves corresponds to a "display volume" in this example. Other configurations for the display screen are possible in which the projector 101 is arranged to project onto only a subsection of the total area swept by the screen 102. In these cases, the "display volume" is defined by the maximum size of a 3D image resulting from the intersection of the projection and the display screen.

The display screen 102 is shown in Figure 1 as a passive screen (i.e. simply a surface onto which the projector 101 projects an image), but in other examples the screen 102 may be an active screen that generates an image. An active screen may for example comprise self-emissive display elements such as OLEDs (organic light emitting diodes), an inorganic LED array or a micro LED array, or a display of the LCD (liquid crystal) with backlight type. In such cases, the projector 101 is not required.

The actuator 104 comprises a mechanism configured to move the screen 102 in the rendering direction 103. In one example the mechanism comprises an electric motor arranged to move the screen 102. In another example, the display screen 102 is provided with a permanent magnet and the mechanism comprises an electromagnetic coil. In this example, a current through the electromagnetic coil can be controlled to create a force on the screen 102 and thereby move it along the rendering direction 103.

The projector 101 may comprise any suitable projecting device capable of projecting rapidly changing 2D images (e.g. video images) onto the surface of the screen 102. Note that even for a static 3D image, the output of the projector 101 is not static; the projector 101 must project the appropriate image for a given slice when the screen 102 is in the corresponding position. This is described in more detail below.

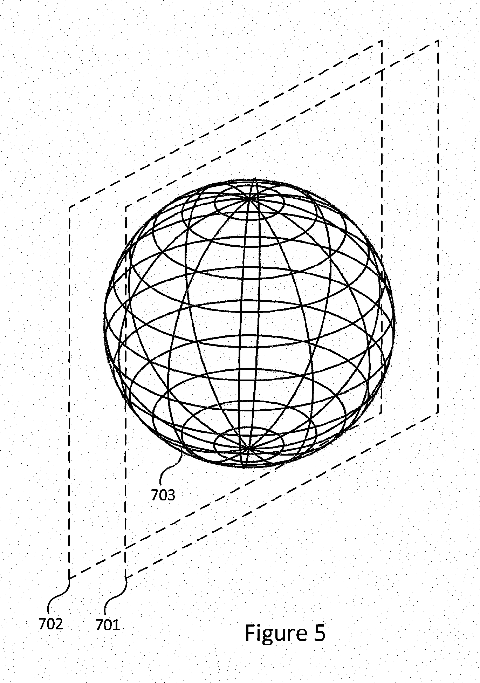

Figure 5 shows an example 3D image 703A (in this case a sphere) as rendered within the display volume of the display device 100. For clarity, the projector 101 and actuator 104 are not shown in Figure 5.

Although shown as a continuous 3D image of a sphere 703A, it is appreciated that the actual rendered image will have a finite resolution both across the screen itself due to the finite resolution of the projector but also in the rendering direction 103. The resolution in the rendering direction 103 is defined by the number of slices per 3D image. In Figure 5, only two slices 701, 702 are shown for ease of explanation but it is appreciated that many more slices may be and typically will be present.

To render the 3D image 703A, the screen 102 is moved through the display volume. When the position of the screen 102 aligns with a slice location, the projector 101 projects the corresponding slice image onto the screen 102. With reference to Figure 5, the screen 102 may move such that it passes through slice 701 and then slice 702. When it is at slice 701, the projector 101 projects the 2D picture corresponding to slice 701 (a circle in this case corresponding to the surface of the sphere 703A intersected with the plane of the slice 701). When the screen 102, at a later time, is at slice 702, the projector 101 projects the 2D picture corresponding to slice 702 (a slightly larger circle in this case corresponding to the surface of the sphere 703A intersected with the plane of slice 702).

It is generally desirable to improve the quality of the rendered 3D image, taking into account available processing power and the limits of human vision. For example, a greater image resolution may be desirable up to a point where the human vision system can no longer distinguish any further increases. Another limit of the resolution may be the available processing power as a higher resolution image (e.g. an image with a greater number of slices or more detail in each slice) will require a higher power processor to handle more data.

The 3D image may be rendered as the screen moves in either direction (or both). For example, the device 100 shown in Figure 1 may project slice images onto the screen 102 as it moves away from the projector 101, towards the projector 101, or both. In any case, there are moments when the screen 102 is at a position within the display volume which do not correspond to a slice location. These may be regarded as "no-information zones" in that there is no explicit image data defined for those regions of the display volume. A higher slice resolution for a given display volume means that the no-information zones are smaller (as the slices are closer together) but more numerous (as there are m-1 no-information zones for m slices).

In conventional swept volume displays, the screen is moved continuously between the boundaries of the display volume. Image data defining a 2D image can be generated (estimated) for a no-information zone by interpolating between at least the two slice images either side. This generated 2D image can be displayed on the screen when it is that no-information zone. However, this can place high demands in the processor, and may in fact not be possible, particularly for high or very high resolution images.

Examples described herein instead propose to control the speed of the screen 102 to move faster in the no-information zones than it does at slice locations, meaning that the screen 102 slows down to render a given slice image and then speeds up to move to the next slice location quickly. This increases the time the screen 102 spends at slice locations and therefore increases the time in which the 2D images can be displayed. A further advantage is that the movement of the screen 102 during rendering of a 2D slice image is minimised, thereby reducing apparent "tearing" or "shearing" of the rendered image.

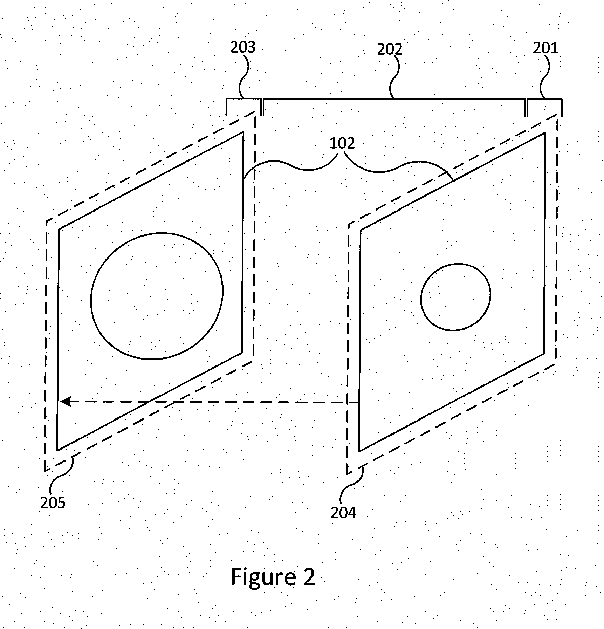

Figure 2 illustrates the screen 102 of display device 100 moving from a first slice location 204 to a second slice location 205. The distance between the slice locations 204, 205 has been expanded for illustrative purposes. When the screen 102 is at the first slice location 204, it displays the corresponding 2D image associated with the first slice location 204. Similarly, when the screen 102 is at the second slice location 205, it displays the corresponding 2D image associated with the second slice location 205. In this example the 2D images are circles which may contribute to a 3D image of a sphere such as shown in Figure 5. It is understood that in general more slice locations will be present than the two shown in Figure 2.

Three regions 201, 202, 203 are shown in Figure 2 along the direction of motion of the screen 102. Region 201 covers at least the first slice location 204. Region 202 covers the no-information zone between the first slice location 204 and second slice location 205 Region 203 covers at least the second slice location 205. The regions 201-203 are non-overlapping and contiguous. That is, region 202 covers the screen locations between region 201 and region 203.

The actuator 104 (not shown in Figure 2) is configured to move the screen 102 at a first speed when the screen 102 is in either region 201 or region 203, and to move the screen 102 at a second speed when the screen 102 is in region 202. The second speed is greater (i.e. faster) than the first speed. This means that as the screen 102 is moved by the actuator 104 from one side of the display volume to the other, it moves slower at slice locations and faster between slice locations.

Comparing the motion of the screen 102 in accordance with the present invention (as described above) with the motion of the screen of a conventional swept volume display (which moves at a constant speed), it can be seen that for a given frame rate the screen 102 of the present invention spends more time at slice locations and less time at no-information zones. That is, by moving the screen 102 quickly between slice locations, the speed of the screen 102 at slice locations can be reduced while still achieving the same framerate (as the total time it takes the screen 102 to perform a single sweep of the display volume can be the same).

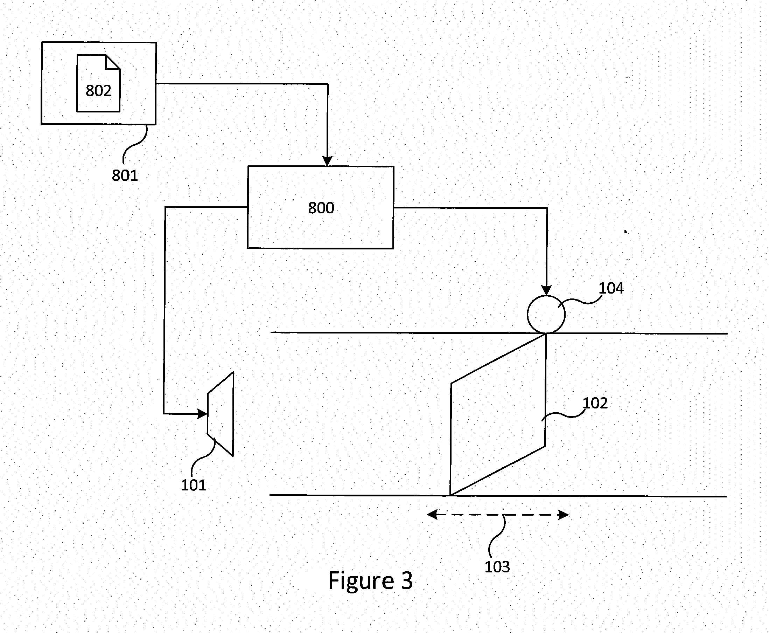

Figure 3 shows a display system 800 comprising the display device 100 (i.e. the projector 101, screen 102, and actuator 104 shown in Figure 1), a controller 801, and a media source 802. The controller 801 is connected to the media source 802 and operatively coupled to the projector 101 and the actuator 104. The controller 801 may be implemented in hardware and/or software.

The controller 801 is arranged to control the actuator 104 and thereby control the position and movement of the display screen 102 within the display volume as described above. The controller 801 is also arranged to control the projector 101 to project 2D images onto the screen 102 as it moves and thereby render a 3D image in accordance with the methods described above. In an alternative example, the screen 102 is an "active" screen and comprises an image generator and is thereby capable of rendering the 2D images itself. In this case, the projector 101 is not needed and instead the controller 801 is arranged to control the actuator 104 and the image generator of the screen 102.

The media source 802 comprises one or more electronic storage devices accessible by the controller 801 in which an image file 803 can be stored as in the example of Figure 3. The image file 803 comprises image data defining a 3D image. The controller 801 is arranged to receive the image file 803 from the media source 802, process the image file 803 to determine control settings for the projector 101 and actuator 104, and to control the projector 101 and actuator 104 in accordance with the determined control settings.

The operation of the projector 101 (or image generator of the screen 102) and actuator 104 are coordinated so that the screen 102 is in the appropriate location within the display volume when a given 2D image is displayed. Hence, in an example, the determined control settings comprise both 2D image data to be output by the projector 101 and movement data concerning the required corresponding motion of the screen 102.

Movement data are determined by the controller 800 from the image file 802 by processing the image data to identify slice locations (i.e. positions within the display volume at which a 2D image will be displayed when the screen 102 is located there). This may be done by the controller 800 based on a slice resolution of the 3D image. For example, if there are fifty 2D image slices per 3D image frame, then the slice locations can be determined as fifty evenly spaced locations spanning the display volume.

The controller 800 then controls the screen 102 to move at a first speed when located at, or substantially located at, one of the determined slice locations and to move at a second, faster speed when not located at, or substantially not located at, one of the determined slice locations. The first speed is preferably zero (at least along the projection axis of the projector). In other examples, the first speed is non-zero but substantially slower than the second speed.

Simultaneously with controlling the screen 102 to move through the slice locations in the manner described above, the controller 800 also controls the projector 101 to display the corresponding 2D image slice on the screen 102 when the screen 102 is located at a given slice location. This results in a 3D image being rendered by the display device 100 from the image file 802.

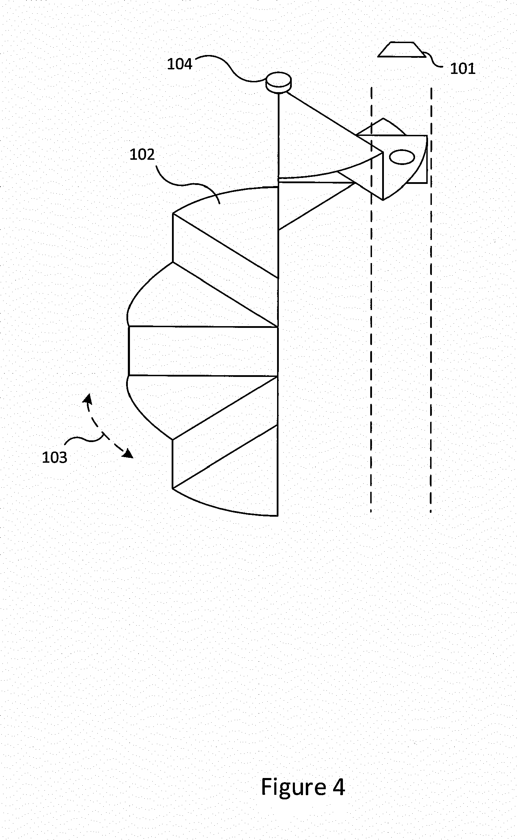

The above description relates to an actuator 104 acting on the screen 102 to move the screen 102 linearly backwards and forwards along the projection axis of a projector 101. However, the non-uniform speed of the screen 102 along the projection axis can be achieved through other means. One such example is shown in Figure 4.

In Figure 4, the display screen 102 takes the form of a helix. In this example, the helix is cylindrical, though the helix may be tapered in other examples. The helix is stepped (like a spiral staircase) and is rotated 103 around the helix axis by an actuator 104 which in this example takes the form of a rotary actuator (e.g. a motor such as an electric motor). The rotation 103 may be in either direction and the helix may have either chirality.

The projector 101 is arranged to project 2D images along and/or parallel to the helix axis (i.e. the helix axis and projection axis are parallel).

As the helix 102 is rotated, the 2D images from the projector 101 fall sequentially onto different steps of the helix 102. The number of steps on the helix 102 corresponds to the slice resolution. Only eight steps are shown in Figure 4 for clarity.

This results in the same effect as described above in relation to Figures 1, 2, 3 and 5. Namely, the distance between the projector 101 and the projected 2D images varies over time, with the speed of the screen 102 relative to the projector 101 being slower at slice locations as these correspond to the steps of the helix. The same effect can be achieved in the case that the helical screen is an "active" screen which generates an image rather than reflecting an image as in the projector example.

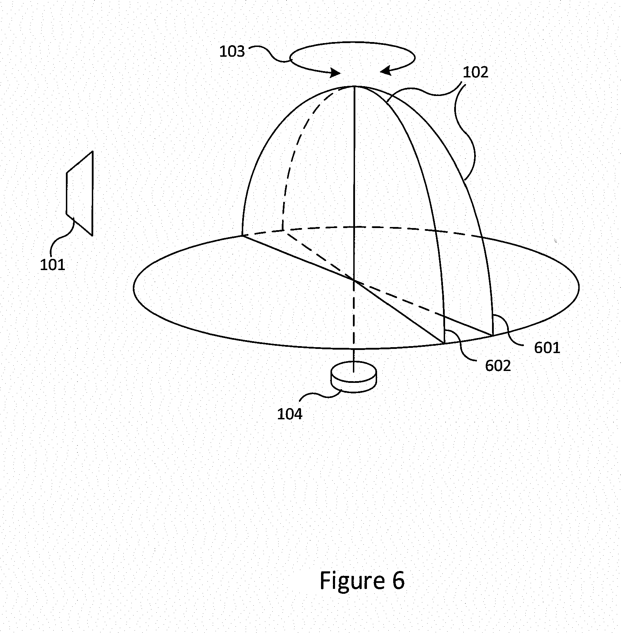

Figure 6 shows a further example of an alternative screen arrangement to achieve the same effect. In this example, the screen 102 comprises a flat, semi-circular surface. The screen 102 is rotated about a central axis by the actuator 104 as shown by movement direction 103. In this case the actuator 104 is a motor such as an electric motor. It is understood that the semi-circular shape of the screen 102 is only exemplary and that the surface may be a different shape, e.g. rectangular.

The screen 102 may again generate the 2D images itself for rendering a 3D image or may be a "passive" screen onto which the 2D images are projector by a projector 101 as shown in Figure 6.

In this example, the slices of the 3D image are not parallel as in the previous examples. Instead, a 3D image suitable for rendering on the arrangement shown in Figure 6 comprises a plurality of image slices which are 2D planes through the image which intersect at a common axis within the display volume. In this example, the display volume is the volume of rotation of the semi-circle about its central axis (i.e. a hemisphere).

The axis of the image slices aligns with the rotation axis of the screen 102. Hence, as the screen 102 rotates, it passes through slice locations. Two example slice locations 601, 602 are shown in Figure 6. It is therefore understood that the principles described above also apply to the setup shown in Figure 6. That is, the actuator 104 is configured to rotate the screen 102 at a first speed when aligned with a slice location (e.g. first slice 601) and to rotate the screen 102 at a second, faster speed when not aligned with a slice location (e.g. between slice 601 and slice 602).

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, modifications not described herein may also be employed within the scope of the appended claims.

## Claims

1. A method of displaying a 3D image within a display volume, the method comprising:
receiving image data (802) which specifies the 3D image as a sequence of 2D image slices through the 3D image, each 2D image slice being located at a respective slice location within the 3D image;
moving a screen (102) within the display volume; and
when a display area of the screen is located at a position within the display volume that corresponds to a slice location (204, 205), displaying the 2D image slice of that slice location on the display area;
**characterised in that** the step of moving the screen within the display volume comprises moving the display area at a first speed when the display area is located at a slice location and moving the display area at a second speed greater than the first speed when the display area is not located at a slice location (202).

2. A method according to claim 1, wherein the 3D image is a static 3D image specified in the image data as a sequence of static 2D image slices through the static 3D image.

3. A method according to claim 1, wherein the 3D image is a 3D video image specified in the image data as a sequence of 2D video image slices through the 3D video image.

4. A method according to any of claims 1 to 3, wherein said moving the screen within the display volume comprises translating the screen within the display volume.

5. A method according to any of claims 1 to 4, wherein said moving the screen within the display volume comprises rotating the screen within the display volume.

6. A method according to any of claims 1 to 4, wherein:
the screen is a helix comprising a plurality of steps around a helix axis, each step providing a respective display area;
the display volume is located off the helix axis; and
said moving the screen within the display volume comprises rotating the helix about the helix axis such that each display area passes through the display area in turn.

7. A method according to any of claims 1 to 6, wherein said displaying a 2D image slice on the screen comprises projecting the 2D image onto the screen.

8. A method according to any of claims 1 to 7, wherein the screen comprises an image display generator for generating an image, and said displaying a 2D image slice on the screen comprises generating the 2D image at the screen using the image display generator.

9. A display device for displaying a 3D image within a display volume, the 3D image being specified as a sequence of 2D image slices through the 3D image, each 2D image slice being located at a respective slice location (204, 205) within the 3D image, the device comprising:
a screen (102) for displaying the 2D image slices; and
an actuator (104) configured to move the screen within the display volume at a first speed when the display area is located at a slice location and moving the display area at a second speed greater than the first speed when the display area is not located at a slice location (202);
wherein the screen is configured to, when a display area of the screen is located at a position within the display volume that corresponds to a slice location (204, 205), display the 2D image slice of that slice location on the display area.

10. A display device according to claim 9, wherein the actuator is configured to move the screen within the display volume by translating the screen within the display volume.

11. A display device according to claim 9 or claim 10 wherein the actuator is configured to move the screen within the display volume by rotating the screen within the display volume.

12. A display device according to any of claim 9 or claim 10, wherein:
the screen is a helix comprising a plurality of steps around a helix axis, each step providing a respective display area;
the display volume is located off the helix axis; and
the actuator is configured to move the screen within the display volume by rotating the helix about the helix axis such that each display area passes through the display area in turn.

13. A display device according to any of claims 9 to 12, in combination with a projector configured to display a 2D image slice on the screen by projecting the 2D image slices on the screen.

14. A display device according to any of claims 9 to 13, wherein the screen comprises an image display generator for generating an image, and the screen is configured to display a 2D image slice on the screen by generating the 2D image at the screen using the image display generator.

15. A display system comprising a controller and a display device according to any of claims 9 to 14, wherein the controller is arranged to receive image data specifying the 3D image and to control the screen and the actuator accordingly.

## Patentansprüche

1. Verfahren zum Anzeigen eines 3D-Bilds innerhalb eines Anzeigevolumens, wobei das Verfahren Folgendes umfasst:
Empfangen von Bilddaten (802), die das 3D-Bild als eine Abfolge von 2D-Bildscheiben durch das 3D-Bild spezifizieren, wobei jede 2D-Bildscheibe sich an einer jeweiligen Scheibenstelle innerhalb des 3D-Bilds befindet;
Bewegen eines Bildschirms (102) innerhalb des Anzeigevolumens; und
wenn ein Anzeigebereich des Bildschirms sich an einer Position innerhalb des Anzeigevolumens befindet, die einer Scheibenstelle (204, 205) entspricht, Anzeigen der 2D-Bildscheibe jener Scheibenstelle auf dem Anzeigebereich;
**dadurch gekennzeichnet, dass**
der Schritt des Bewegens des Bildschirms innerhalb des Anzeigevolumens ein Bewegen des Anzeigebereichs mit einer ersten Geschwindigkeit, wenn der Anzeigebereich sich an einer Scheibenstelle befindet, und ein Bewegen des Anzeigebereichs mit einer zweiten Geschwindigkeit, die höher als die erste Geschwindigkeit ist, wenn der Anzeigebereich sich nicht an einer Scheibenstelle befindet (202), umfasst.

2. Verfahren nach Anspruch 1, wobei das 3D-Bild ein statisches 3D-Bild ist, das in den Bilddaten als eine Abfolge von statischen 2D-Bildscheiben durch das statische 3D-Bild spezifiziert ist.

3. Verfahren nach Anspruch 1, wobei das 3D-Bild ein 3D-Videobild ist, das in den Bilddaten als eine Abfolge von 2D-Videobildscheiben durch das 3D-Videobild spezifiziert ist.

4. Verfahren nach einem der Ansprüche 1 bis 3, wobei das Bewegen des Bildschirms innerhalb des Anzeigevolumens ein Versetzen des Bildschirms innerhalb des Anzeigevolumens umfasst.

5. Verfahren nach einem der Ansprüche 1 bis 4, wobei das Bewegen des Bildschirms innerhalb des Anzeigevolumens ein Drehen des Bildschirms innerhalb des Anzeigevolumens umfasst.

6. Verfahren nach einem der Ansprüche 1 bis 4, wobei:
der Bildschirm eine Wendel ist, die mehrere Stufen um eine Wendelachse umfasst, wobei jede Stufe einen jeweiligen Anzeigebereich bereitstellt;
das Anzeigevolumen sich von der Wendel weg befindet und das Bewegen des Bildschirms innerhalb des Anzeigevolumens ein Drehen der Wendel um die Wendelachse umfasst, so dass jeder Anzeigebereich der Reihe nach durch den Anzeigebereich hindurchgeht.

7. Verfahren nach einem der Ansprüche 1 bis 6, wobei das Anzeigen einer 2D-Bildscheibe auf dem Bildschirm ein Projizieren des 2D-Bilds auf den Bildschirm umfasst.

8. Verfahren nach einem der Ansprüche 1 bis 7, wobei der Bildschirm einen Bildanzeigegenerator zum Erzeugen eines Bilds umfasst und das Anzeigen einer 2D-Bildscheibe auf dem Bildschirm ein Erzeugen des 2D-Bilds an dem Bildschirm unter Verwendung des Bildanzeigegenerators umfasst.

9. Anzeigevorrichtung zum Anzeigen eines 3D-Bilds innerhalb eines Anzeigevolumens, wobei das 3D-Bild als eine Abfolge von 2D-Bildscheiben durch das 3D-Bild spezifiziert ist, wobei jede 2D-Bildscheibe sich an einer jeweiligen Scheibenstelle (204, 205) innerhalb des 3D-Bilds befindet, wobei die Vorrichtung Folgendes umfasst:
einen Bildschirm (102) zum Anzeigen der 2D-Bildscheiben und
ein Bedienungselement (104), das dazu konfiguriert ist, den Bildschirm innerhalb des Anzeigevolumens mit einer ersten Geschwindigkeit zu bewegen, wenn der Anzeigebereich sich an einer Scheibenstelle befindet, und den Anzeigebereich mit einer zweiten Geschwindigkeit, die höher als die erste Geschwindigkeit ist, zu bewegen, wenn der Anzeigebereich sich nicht an einer Scheibenstelle befindet (202);
wobei der Bildschirm dazu konfiguriert ist, wenn ein Anzeigebereich des Bildschirms sich an einer Position innerhalb des Anzeigevolumens befindet, die einer Scheibenstelle (204, 205) entspricht, die 2D-Bildscheibe jener Scheibenstelle auf dem Anzeigebereich anzuzeigen.

10. Anzeigevorrichtung nach Anspruch 9, wobei das Bedienungselement dazu konfiguriert ist, den Bildschirm innerhalb des Anzeigevolumens durch Versetzen des Bildschirms innerhalb des Anzeigevolumens zu bewegen.

11. Anzeigevorrichtung nach Anspruch 9 oder 10, wobei das Bedienungselement dazu konfiguriert ist, den Bildschirm innerhalb des Anzeigevolumens durch Drehen des Bildschirms innerhalb des Anzeigevolumens zu bewegen.

12. Anzeigevorrichtung nach Anspruch 9 oder 10, wobei:
der Bildschirm eine Wendel ist, die mehrere Stufen um eine Wendelachse umfasst, wobei jede Stufe einen jeweiligen Anzeigebereich bereitstellt;
das Anzeigevolumen sich von der Wendel weg befindet und das Bedienungselement dazu konfiguriert ist, den Bildschirm innerhalb des Anzeigevolumens durch Drehen der Wendel um die Wendelachse zu bewegen, so dass jeder Anzeigebereich der Reihe nach durch den Anzeigebereich hindurchgeht.

13. Anzeigevorrichtung nach einem der Ansprüche 9 bis 12 in Kombination mit einem Projektor, der dazu konfiguriert ist, eine 2D-Bildscheibe auf dem Bildschirm durch Projizieren der 2D-Bildscheiben auf dem Bildschirm anzuzeigen.

14. Anzeigevorrichtung nach einem der Ansprüche 9 bis 13, wobei der Bildschirm einen Bildanzeigegenerator zum Erzeugen eines Bilds umfasst und der Bildschirm dazu konfiguriert ist, eine 2D-Bildscheibe auf dem Bildschirm ein Erzeugen des 2D-Bilds an dem Bildschirm unter Verwendung des Bildanzeigegenerators anzuzeigen.

15. Anzeigesystem, das eine Steuereinheit und eine Anzeigevorrichtung nach einem der Ansprüche 9 bis 14 umfasst, wobei die Steuereinheit dazu eingerichtet ist, Bilddaten zu empfangen, die das 3D-Bild spezifizieren, und den Bildschirm und das Bedienungselement entsprechend zu steuern.

## Revendications

1. Procédé servant à afficher une image tridimensionnelle dans les limites d'un volume d'affichage, le procédé comportant les étapes consistant à :
recevoir des données d'image (802) qui spécifient l'image tridimensionnelle comme étant une séquence de tranches d'image bidimensionnelle au travers de l'image tridimensionnelle, chaque tranche d'image bidimensionnelle étant située au niveau d'un emplacement de tranche respectif dans l'image tridimensionnelle ;
déplacer un écran (102) dans les limites du volume d'affichage ; et
quand une zone d'affichage de l'écran est située au niveau d'une position dans les limites du volume d'affichage qui correspond à un emplacement de tranche (204, 205), afficher la tranche d'image bidimensionnelle de cet emplacement de tranche sur la zone d'affichage ;
**caractérisé en ce que** l'étape consistant à déplacer l'écran dans les limites du volume d'affichage comporte l'étape consistant à déplacer la zone d'affichage à une première vitesse quand la zone d'affichage est située au niveau d'un emplacement de tranche et l'étape consistant à déplacer la zone d'affichage à une deuxième vitesse supérieure par rapport à la première vitesse quand la zone d'affichage n'est pas située au niveau d'un emplacement de tranche (202).

2. Procédé selon la revendication 1, dans lequel l'image tridimensionnelle est une image tridimensionnelle statique spécifiée dans les données d'image sous la forme d'une séquence de tranches d'image bidimensionnelle statiques au travers de l'image tridimensionnelle statique.

3. Procédé selon la revendication 1, dans lequel l'image tridimensionnelle est une image vidéo tridimensionnelle spécifiée dans les données d'image sous la forme d'une séquence de tranches d'image vidéo bidimensionnelle au travers de l'image vidéo tridimensionnelle.

4. Procédé selon l'une quelconque des revendications 1 à 3, dans lequel ladite étape consistant à déplacer l'écran dans les limites du volume d'affichage comporte l'étape consistant à faire translater l'écran dans les limites du volume d'affichage.

5. Procédé selon l'une quelconque des revendications 1 à 4, dans lequel ladite étape consistant à déplacer l'écran dans les limites du volume d'affichage comporte l'étape consistant à faire pivoter l'écran dans les limites du volume d'affichage.

6. Procédé selon l'une quelconque des revendications 1 à 4, dans lequel :
l'écran est une hélice comportant une pluralité de paliers autour d'un axe d'hélice, chaque palier procurant une zone d'affichage respective ;
le volume d'affichage est situé de manière décalée par rapport à l'axe d'hélice ; et
ladite étape consistant à déplacer l'écran dans les limites du volume d'affichage comporte l'étape consistant à faire pivoter l'hélice autour de l'axe d'hélice de telle sorte que chaque zone d'affichage passe par la zone d'affichage tour à tour.

7. Procédé selon l'une quelconque des revendications 1 à 6, dans lequel ladite étape consistant à afficher une tranche d'image bidimensionnelle sur l'écran comporte l'étape consistant à faire projeter l'image bidimensionnelle sur l'écran.

8. Procédé selon l'une quelconque des revendications 1 à 7, dans lequel l'écran comporte un générateur d'affichage d'image servant à générer une image, et ladite étape consistant à afficher une tranche d'image bidimensionnelle sur l'écran comporte l'étape consistant à générer l'image bidimensionnelle au niveau de l'écran en utilisant le générateur d'affichage d'image.

9. Dispositif d'affichage servant à afficher une image tridimensionnelle dans les limites d'un volume d'affichage, l'image tridimensionnelle étant spécifiée comme étant une séquence de tranches d'image bidimensionnelle au travers de l'image tridimensionnelle, chaque tranche d'image bidimensionnelle étant située au niveau d'un emplacement de tranche respectif (204, 205) dans l'image tridimensionnelle, le dispositif comportant :
un écran (102) servant à afficher les tranches d'image bidimensionnelle ; et
un actionneur (104) configuré pour déplacer l'écran dans les limites du volume d'affichage à une première vitesse quand la zone d'affichage est située au niveau d'un emplacement de tranche et pour déplacer la zone d'affichage à une deuxième vitesse supérieure par rapport à la première vitesse quand la zone d'affichage n'est pas située au niveau d'un emplacement de tranche (202) ;
dans lequel l'écran est configuré pour, quand une zone d'affichage de l'écran est située au niveau d'une position dans les limites du volume d'affichage qui correspond à un emplacement de tranche (204, 205), afficher la tranche d'image bidimensionnelle de cet emplacement de tranche sur la zone d'affichage.

10. Dispositif d'affichage selon la revendication 9, dans lequel l'actionneur est configuré pour déplacer l'écran dans les limites du volume d'affichage en faisant translater l'écran dans les limites du volume d'affichage.

11. Dispositif d'affichage selon la revendication 9 ou la revendication 10, dans lequel l'actionneur est configuré pour déplacer l'écran dans les limites du volume d'affichage en faisant pivoter l'écran dans les limites du volume d'affichage.

12. Dispositif d'affichage selon la revendication 9 ou la revendication 10, dans lequel :
l'écran est une hélice comportant une pluralité de paliers autour d'un axe d'hélice, chaque palier procurant une zone d'affichage respective ;
le volume d'affichage est situé de manière décalée par rapport à l'axe d'hélice ; et
l'actionneur est configuré pour déplacer l'écran dans les limites du volume d'affichage en faisant pivoter l'hélice autour de l'axe d'hélice de telle sorte que chaque zone d'affichage passe par la zone d'affichage tour à tour.

13. Dispositif d'affichage selon l'une quelconque des revendications 9 à 12, en combinaison avec un projecteur configuré pour afficher une tranche d'image bidimensionnelle sur l'écran en faisant projeter les tranches d'image bidimensionnelle sur l'écran.

14. Dispositif d'affichage selon l'une quelconque des revendications 9 à 13, dans lequel l'écran comporte un générateur d'affichage d'image servant à générer une image, et l'écran est configuré pour afficher une tranche d'image bidimensionnelle sur l'écran en faisant générer l'image bidimensionnelle au niveau de l'écran en utilisant le générateur d'affichage d'image.

15. Système d'affichage comportant un dispositif de commande et un dispositif d'affichage selon l'une quelconque des revendications 9 à 14, dans lequel le dispositif de commande est agencé pour recevoir des données d'image spécifiant l'image tridimensionnelle et pour commander l'écran et l'actionneur en conséquence.
